Europäisches Patentamt

(19) European Patent Office

Office européen des brevets

(11) Publication number: **0 223 359 B1**

# EUROPEAN PATENT SPECIFICATION

(45) Date of publication of patent specification: **03.04.91**

(51) Int. Cl.⁵: **B29C 41/22**, B29C 41/18, B29C 69/00, //B29L31:30

(21) Application number: **86307117.1**

(22) Date of filing: **16.09.86**

(54) Mold method and split mold apparatus for multi-color plastic shells.

(30) Priority: **04.11.85 US 794805**

(43) Date of publication of application:
**27.05.87 Bulletin 87/22**

(45) Publication of the grant of the patent:
**03.04.91 Bulletin 91/14**

(84) Designated Contracting States:
**DE FR GB IT SE**

(56) References cited:
**DE-A- 2 501 291          FR-A- 1 560 675**
**FR-A- 2 114 604          FR-A- 2 402 523**
**GB-A- 968 760            JP-A-60 189 431**

**PATENT ABSTRACTS OF JAPAN, vol. 9, no. 11 (M-351)[1734], 18th January 1985; & JP-A-59 159 309 (INOUE EMU TEE PII K.K.) 08-09-1984**

**KUNSTSTOFFBERATER, vol. 31, nos. 7-8, July/August 1986, pages 51-53, Isernhagen (Hannover), DE; DR. R. SAFFERT: "Armaturenbrett-Fertigung nach der PVC-Powder-Slush-Technologie"**

(73) Proprietor: **DAVIDSON TEXTRON INC.**
**Industrial Park**
**Dover New Hampshire 03820(US)**

(72) Inventor: **Gray, John D.**
**Middleton Road**
**New Durham New Hampshire 03855(US)**

(74) Representative: **Hartley, David et al**
**Withers & Rogers 4 Dyer's Buildings Holborn London, EC1N 2JT(GB)**

## Description

This invention pertains to a process and an apparatus according to the preambles of claims 1 and 4. such a process and such an apparatus are known from FR-A- 1560675. The plastic shells made by the process and the apparatus are especially suitable for use in automobile trim components such as interier door panels.

The automative industry has turned to the use of interior trim components such as door panels comprising a polyvinyl chloride shell. See, for example. the trim components disclosed in U.S. patent No. 3,123,403. The acceptance of such components has been because inter alia this type of construction permits a wide latitude in styling and colour, and grain effects which are most desired particularly in the interior design of automobiles.

The current state of the art includes a preformed grained vinyl shell made from dry thermoplastic plastisol particles which are applied to a heated shell mould from a supply box to form a continuous monochromatic one-piece shell.

In order to enhance the interior decor of an automobile, interior door panels and other parts have been proposed which include two separate plastic shell sections formed from different coloured plastic joined by a separate connector strip at a connection joint.

The use of multi-colour plastic is also known in the manufacture of coloured filaments. Such manufacture includes use of a compartmented spinning head for making two-coloured yarn as disclosed in US 3, 049,397 issued August l4, 1962 for Process of Making Space-Dyed Yarn.

Apparatus and method for multiple coloured thermoplastic floor materials are set forth in US 3,383,442 issued May 14, 1968.

Also, the use of movable dividers in moulds for moulding products is known as practised in US 1,521,316, issued December 30, 1924, US 3,859,016, issued January 7, 1975 and US 4,335,068, issued June 15, 1982.

None of the aforesaid methods and apparatus for manufacture of plastic products is directed to a process or apparatus for manufacturing a single piece shell product, for example, an interior panel component of an automobile.

FR-A-1, 560,675 discloses a process for forming a single-piece plastics shell comprising: heating an open-ended mould to a temperature near the melt temperature of a plastisol thermoplastic material connecting a change box to the mould to form a closed system including plastisol, and subsequently rotating the charge box and mould in a plastisol casting sequence to release plastisol particles by gravity onto a casting surface of the mould to build up a fused plastisol shell of desired shape and size within the mould.

FR-A-1, 560,675 also discloses apparatus for moulding a thin-walled plastic shell in a heated open-ended mould from a charge of dry thermoplastic plastisol material in open-ended charge box means said apparatus comprising: means for joining a mould and charge box in open-ended relationship, and means for rotating the mould and charge box so as to distribute plastisol material against a carting surface of the mould.

In one aspect the present invention provides a process as disclosed in FR-A-1,560,675 characterised by providing, prior to rotation of the charge box first and second split mould portions movable between clamping and unclamping positions with respect to each other and with respect to a mould divider for sealing an interior portion of the charge box and sealing to separate first and second casting surfaces of said first and second mould portions respectively, by releasing plastisol particles of a different colour onto each of said casting surfaces during the rotation of the charge box, to build up separate partially fixed plastisol shells of desired shape and size on the respective split mould portions; by separating the split mould portions for removal of the divider and charge box from the mould, by thereafter positioning the split mould portions together to clamp the separate, partially fused shells together and finally fixing the shells to form an integral joint therebetween and thereby form a multi-colour shell.

In another aspect the invention provides apparatus as disclosed in FR-A-1,560,675 characterised in that said charge box comprises a single open-ended box having a divider separating the box into first and second open-end compartments which are capable of distributing two charges of different colour against respective separate casting surfaces of the mould; said mould has first and second split portions which define said first and second casting surfaces, said first and second split portions being movable to clamp and unclamp the divider, and said mould has joint-formation means including a bent end on one of said split mould portions which is engageable with said divider when in a clamped position to form a powder collection region.

A more complete understanding of the invention will be apparent to those skilled in the art from the succeeding detailed description by way of example only of the preferred embodiments of the invention with reference to the accompanying drawings thereof.

Figure 1 is a schematic view of a single-piece multi-colour panel formed by a method in accordance with the present invention shown with associated component parts of an automotive vehicle door panel;

Figure 2 is a diagrammatically shown sectional view of a mould component of the apparatus of the invention in association with a charge box ;

Figure 3 is a diagrammatically shown sectional view of a box forming part of the apparatus of the invention sealed to the mould of Figure 2 in a pre-release position;

Figure 4 is a sectional view like Figure 3 showing the box and mould in a plastisol release orientation;

Figure 5 is a fragmentary, enlarged sectional view of a split mould and divider means disposed in a plastisol particle casting disposition;

Figure 6 is a fragmentary, enlarged sectional view of the split mould parts disposed for removal of a charge box and divider;

Figure 7 is a fragmentary, enlarged sectional view of the split mould parts clamped to form an integral joint between previously cast shells formed on the split mould parts by partially fused plastisol particles;

Figure 8 is a fragmentary, enlarged sectional view of an abutting joint design of the split mould tooling; and

Figure 9 is a second embodiment of the joint design of the split mould tooling shown in Figure 9.

The process and apparatus of the present invention will be described with reference to the production of plastic thin-walled shells for a typical automotive part such as an interior door panel, console panel or instrument panel.

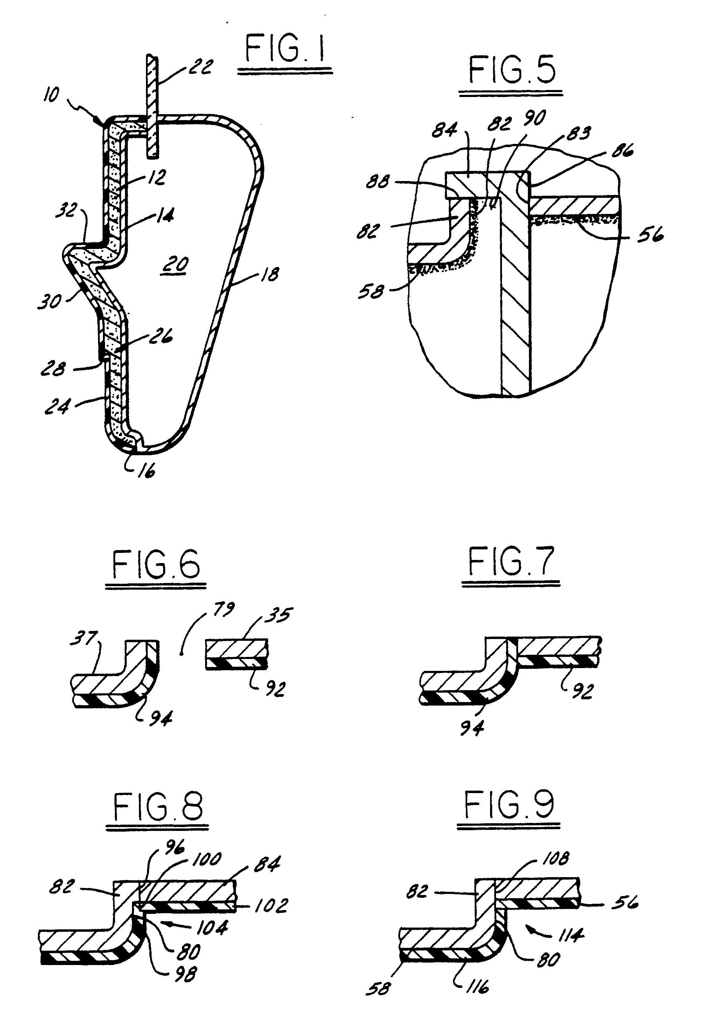

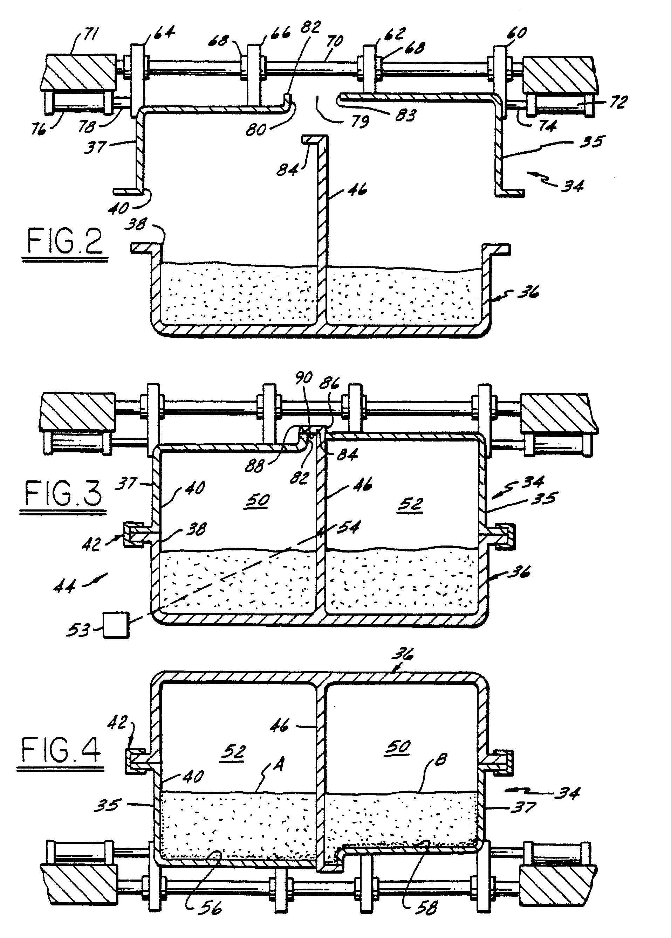

Figure 1 shows a typical automobile door panel application of a multi-colour, single-piece interior plastic shell 10. The shell 10, preferably made of polyvinyl chloride material, is backed by a layer of polyurethane foam l2 bonded to the shell 10 by a mould process such as in USPN 3,123,403,issued March 3, 1964 for Automobile Arm Rest. An interior reinforcing insert 14 is connected at a joint 16 to an outer door shell 18 to form an interior space 20 for window lift mechanism (not illustrated) to raise and lower a window 22.

In accordance with the present invention the shell is a onepiece plastic part with an integral lower panel 24 of a drycast plastic having a first colour. The shell 10 includes an integral joint 26 which is at the base of a recesed groove 28. The groove 28 forms a transition to an integrally formed upper panel 30 including an armrest segment 32 formed of drycast plastic having a second colour contrasting or complementing the colour of the first panel 24 or other interior components. For example, the upper panel can be red, blue, yellow or beige to contrast with or complement the interior colour of seats, headliners,instrument panels and the like. The lower panel 24 can be coloured a deeper complementary tone colour of a character which has a low impact or scuff display character.

Referring to Figures 2-4, a dry plastisol moulding process line is schematically shown as including selectively heated mould 34 with split portions 35,37. A plastisol box 36 is operated between raised and lowered positions with respect to the mould 34 by suitable handling equipment, one type of which is specifically set forth in co-pending USSN 500,760 filed June 3, 1983 for Mould Loading Method and Apparatus.

The box 36 further includes an upper open end 38 which is configured to cover the planar extent of a complementary opening 40 to mould 34.

Clamp means 42 joint and seal the charge box 36 to mould 34 when the box 36 is elevated to the position shown in Figure 3, hereinafter referred to as the "mould-up" position.

As a result, the interior of box 36 and the interior of mould 34 form a closed system 44 having plastisol charges in the box 36.

In accordance with the process and aparatus of the present invention, the box 36 is provided with a divider 46 and the mould 34 has its pslit portions 35, 37 movable between clamping and unclamped positions to be described.

The divider 46 and split portions 35, 37 are in contact during plastisol casting to form two separate compartments 50, 52 each containing a charge of plastic plastisol material of a different colour (colour A in 50, colour B in 52).

The casting process step includes concurrent rotation fo the closed system 44 by drive means 53 about axis 54 defined by trunnions means of the type set forth in co-pending USSN 500,760 through 180 degrees relative to the Figure 3 position.

At Figure 4 a fill step of the process is shown in which dry plastisol is distributed evenly throughout the mould opening 40. A resultant build-up of cast plastisol occurs on pre-heated casting surfaces 56, 58 on the split portions 35, 37, respectively, of the mould 34. The mould position shown in Figure 4 will hereinafter be referred to as the "mould-down" position.

Following the fill step, the joined mould 34 and charge box 36 are again rotated 180 degress by the drive means so that the mould 34 is located vertically above the box 36 in the mouldup position.

An air-jet system of the type shown in the co-pending USSN 500,760 may be used to dislodge excess plastisol from the walls of the mould by the drive means so that the dislodged material will flow by gravity return to the interior of the box for collection and reuse in the system.

A plastisol fuse cycle is then carried out in accordance with known practice wherein the plastisol particles are partially fused as a thin-walled part. The charge box is unclamped from the mould 34 and the split portions 35, 37 are separated by a space 60 so that the divider 46 as shown in Figure 6 and the box 36 can be removed from the mould and returned to a plastisol make-up position. Thereafter the mould split portions 35, 37 are clamped with the plastisol cast to the surfaces 56, 58 being forced together when partially fused. The unit is heated further to finally fuse the plastisol, then is cooled and rotated 180 degrees into a strip position corresponding to the mould-down position. Make-up plastisol of appropriate colour is fed to the multiple separate colour compartments.

In accordance with the present invention, the split portions 35, 37 and divider 46 are specially configured and sequentially, operatively positioned to produce an integral joint between plastisol cast on the respective surfaces 56, 58. More specifically, as shown in Figure 2, the split portions 35,37 have spaced supports 60, 62 and 64, 66, respectively, fixed thereto. Each of the supports 60-66 carry a bearing 68 that is slidably supported on a guide rod 70 which is supported to a mould support 71. A reciprocating drive unit 72 has its drive shaft 74 coupled to split portion 35 to reciprocate it through clamping and unclamping movements on rod 70 with respect to split portion 37. Likewise, a reciprocating drive unit 76 has its drive shaft 78 connected to split portion 37 to reciprocate it through clamping and unclamping movements on rod 70 with respect to split portion 35.

In figure 2, the poritions 35, 37 are moved into a first unclamped position which defines the opening 79 between a surface 80 on bent edge 82 of portion 37 and a straight edge 83 on portion 35. The opening 79 is sized to receive a bent end 84 of the divider 46 as the mould 34 and box 36 are initially joined.

Once the bent end 84 is positioned in the opening 79, the portions 35,37 are moved by drive units 72, 76 thorugh a clamping movement in which edge 83 engages the bent end 84 at surface 86 and a surface 88 on bent end 82 engages an inboard surface 90 of end 84; all of the aforesaid surface interfaces co-operating to form the plastisol casting clamping position of Figure 5. In this position, the divider end 84 separates plastisol particles A cast on surface 56 from plastisol particles B cast on surface 58.

Once the plastisol is cast, the mould 34 and box 36 return to the Figure 3 position. As shown in Figure 6, the mould is positioned in an unclamped position which separates the split portions 35 and 37 to form the opening 79 for removing the divider 46 from the mould.

Partially fused particles of plastisol define layers 92, 94 on the casting surfaces 56, 58 on the separated split portions 35, 37. The split portions 35,37 are then moved through a clamping movement which causes the layer 92 to be joined and clamped to layer 94, as shown in Figure 7. The layers 92, 94 are folded and/or pushed together and are finally fused to form a folded joint in a unitary, one-piece product.

Two typical joint-line sections are shown in Figures 8 and 9. Figure 8 shows an abutting joint. In this configuration the net tooling closure line 96 is disposed approximately midway of a plastisol layer 98 formed on the surface 80 of bent end 82. The end 100 of a layer 102 formed at the straight end 84 is thus abutted into and clamped to the layer 98 to form an L-shaped joint 104 therebetween.

In Figure 9 a compression mortise joint is shown. It is formed by locating the net tooling closure line 108 at the surface 80 on bent end 82. Also, there is a vertical offset of the casting surfaces 56, 58 so that a plastisol layer 112 cast on surface 56 will form a straight line joint 114 with respect to the plastisol 116 formed on surface 80 of bent end 82.

A typical powder casting process for a two-colour door panel includes the following sequence.

1. Preheat tool in oven to temperature between 121° and 199° and 390° F.
2. After mould cast temperature is reached, attach the powder box to the mould.
3. Rotate box and mould.
4. Dwell time on top (for part thickness)
5. Rotate 180° and unclamp.
6. Clamp the split mold parts to join partially fused spearate shells and return the mould to the oven for cure.

Examples of suitable mould heating processes for use with the process and apparatus of the present invention include mould temperature control by heated and cooled air or oil heating and cooling flow as set forth in US 4,217,325 issued August 12, 1980 to D. Colby. Suitable thermoplastic plastisol particles include plasticised polyvinyl chlorides and related vinyl resins in dry form for ease of gravity flow from the charge box 36 during both fill and return steps. Typical examples of parts, plastic materials and mould processes include the following:

Examples of parts that have been made by the dry PVC cast moulding process include a door panel shell having a mould volume of approximately 0.170m³ (six (6) cubic feet).

PVC resin, plasticiser, stabiliser, release agents and colour pigments are combined in a high intensity mixer to produce a dry, flowable powder of each desired colour. The process is known in the industry as dry-blending.

The various compound components may be selected as to type and ratio to provide the properties required both for the finished product and for ease of processing. Physical properties will not be too dissimilar from those obtained with liquid plastisol which is also used to manufacture similar products but has an inherent weakness for forming objectionable drips and runs when made in complex shapes.

Processing properties are such that when melting of the plastic powder occurs, densification results in exact reproduction of minute detail such as grain marks and stitches engraved in the mould surface.

Mould preheating temperature may range from 250˚F to 390˚F. Since the thickness of the finished product is also governed by the time the plastisol particles contact the mould, it should be understood that simultaneous charging of the particles to the split mould portions can be of definite advantage. Also, if certain areas of the mould can be made to have a lower preheated temperature than others, it will permit moulding a thinner shell in those areas, since both temperature and mould-filled time determine the final thickness of the shell. Therefore, a very flexible range, for mould-filled time, of one second to ten seconds or more has been established.

Depending on formulation, final metling or fusion of the PVC powder occurs when mould temperatures reach 177˚C to 232˚C (350˚F to 450˚F).

After final fusion, the mould is cooled to a temperature which will facilitate removal of the shell without damage.

Specifically the process and apparatus of the present invention enable even and complete distribution of thermo-plastic plastisol material onto mould surfaces to form large, long, thin-walled single-piece two-colour or more shells for interior door panels and the like formed during short cycle mould cycles in limited plant floor space.

## Claims

1. A process for forming a single-piece plastics shell (10) comprising:
heating on open-ended mould (34) to a temperature near the melt temperature of a plastisol thermoplastic material; connecting a charge box (36) to the mould to form a closed system including plastisol, and subsequently rotating the charge box and mould in a plastisol casting sequence to release plastisol particles by gravity onto a casting surface (56,58) of the mould to build up a fused plastisol shell of desired shape and size within the mould, characterised by providing, prior to rotation of the charge box (36) first and second split mould portions (35,37) movable between clamping and unclamping positions with respect to each other and with respect to a mould divider (46) for sealing and interior portion of the charge box and sealing to separate first and second casting surfaces (56,58) of said first and second mould portions (35,37) respectively, by releasing plastisol particles of a different colour onto each of said casting surfaces during the rotation of the charge box, to build up separately partially fused plastisol shells (92,94) of desired shape and size on the respective split mould portions, by separating the split mould portions (35,37) for removal of the divider (46) and charge box (36) form the mould, by thereafter positioning the split mould portions (35,37) together to clamp the separate, partially fused shells (92,94) together and finally firing the shells to form an integral joint therebetween and thereby form a multi-colour shell (10)

2. A process according to claim 1 including providing a first bend end (82) on one of the split mould portions (37) and a straight edge (83) on the other of the split mould portions (35);providing a divider (46) with a second bent end (84); positioning the first and second split mould portions apart to form a space (79) between the first bent end and the straight edge of a width to accommodate the second bent end therebetween; and positioning the split mould portions during casting so as to clamp the second bent end between the first bent end (82) and the straight edge (83)so as to form a pocket (90) for casting a first charge of plastisol particles against all of the inboard surface of the first bent end at one casting surface and across all the inboard surface of the other casting surface.

3. A process according to claim 2, including locating the straight edge (83) at the mid-point of a plastisol shell (98) cast on the first bent end (82) and locating the shell (102) cast on the other casting surface to extend from the plane (96) of the end of the first bent end (82) during clamping of the partially fused shells so as to form an integral L-shaped abutting joint (104) between the first and second shells following final fusion.

4. Apparatus for moulding a thin-walled plastic shell (10) in a heated open-ended mould (34) from a charge of dry thermoplastic plastisol material in open-ended charge box means (36) said apparatus comprising: means (42) for joining a mould (34) and charge box (36) in open-ended relationship, and means (53) for rotating the mould and charge box so as to distribute plastisol material against a casting surface (56,58) of the mould; characterised in that : said charge box (36) comprises a single open-end box having a divider (46) separating the box into first (50) and second (52) open-end compartments which are capable of distributing two charges of different colour against respective separate casting surfaces (56,58) of the mould (34); said mould has first (35) and second (37) split portions which define said first and second casting surfaces,said first and second split portions being movable to clamp and unclamp the divider, and said mould has joint-formation means (82,83,84) including a bent end (82) on one (37) of said split mould portions which is engageable with paid divider (43) when in a clamped position to form a powder collection region.

5. Apparatus according to claim 4 including means (72,76) for unclamping said split portions (35,37) of said mould (34) from the divider to permit separation of said charge box (36) from said mould, and means (72,76) for clamping said split portions (35,37) to cause separate plastisol shells (92,94) cast thereon to be finally fused to form an integral joint (104,114) between such shells.


**Revendications**

1. Procédé pour réaliser une coquille monobloc en matière plastique (10) qui comporte le fait de chauffer un moule à extrémité ouverte (34) à une température voisine de la température de fusion d'un matériau thermoplastique plastisol; de connecter une boîte de charge (36) au moule pour former un système fermé renfermant le plastisol et de faire tourner ensuite la boîte de charge et le moule en séquences de coulage du plastisol pour libérer des particules de plastisol par gravité sur une surface de coulage (56,58) du moule pour réaliser une coquille en plastisol fondu de forme et dimensions désirées à l'intérieur du moule, caractérisé en ce qu'il consiste à prévoir, avant la rotation de la boîte de charge (36) des première et seconde parties de moule divisées (35,37) susceptibles de se déplacer entre des positions de serrage et de desserrage l'une par rapport à l'autre et par rapport à un diviseur de moule (46) pour assurer l'étanchéité d'une partie intérieure de la boîte de charge et assurer une étanchéité de façon à séparer les première et seconde surfaces de coulage (56,58) desdites première et seconde parties de moule (35,37) respectivement, en libérant des particules de plastisol d'une couleur différente sur chacune desdites surfaces de coulage au cours de la rotation de la boîte de charge, pour réaliser des coquilles de plastisol fondu séparées partiellement (92,94) de forme et dimensions désirées sur les parties de moule divisées respectives, en séparant les parties de moule divisées (35,37) pour extraire le diviseur (46) et la boîte de charge (36) du moule, par positionnement subséquent des parties de moule divisées (35,37) l'une et l'autre pour serrer les coquilles fondues partiellement distinctes (92,94) l'une à l'autre et finalement de chauffer les coquilles pour réaliser entre elles un joint de solidarisation et constituer ainsi une coquille polychrome (10).

2. Procédé selon la revendication 1, qui comporte le fait de prévoir une première extrémité coudée (82) sur une des parties de moule divisées (37) et un bord rectiligne (83) sur l'autre des parties de moule divisées (35) ; de prévoir un diviseur (46) avec une seconde extrémité coudee (84) ; de positionner les première et seconde parties de moule divisées séparément l'une de l'autre pour constituer un espace (79) entre la première extrémité coudée et le bord rectiligne avec une largeur qui correspond à la seconde extrémité coudée située entre ces éléments ; et de positionner les parties de moule divisées au cours du coulage de façon à serrer la deuxième extrémité coudée entre la première extrémité coudée (82) et le bord rectiligne (83) de façon à réaliser une poche (90) pour le coulage d'une première charge de particules de plastisol contre toute la surface interne de la première extrémité coudée à une surface de coulage et à travers toute la surface interne de l'autre surface de coulage.

3. Procédé selon la revendication 2, qui comporte le fait de localiser le bord rectiligne (83) à midistance sur une coquille de plastisol (98) coulée sur la première extrémité coudée (82) et de disposer la coquille (102) coulée sur l'autre surface de coulage pour qu'elle se prolonge à partir du plan (96) de l'extrémité de la première extrémité coudée (82) au cours du serrage des coquilles partiellement fondues de façon à réaliser un joint de butée (104) solidarisé en forme de L entre les première et seconde coquilles à la suite de la fusion finale.

4. Appareil pour mouler une coquille en matière plastique à paroi mince (10) dans un moule chauffé à extrémité ouverte (34) à partir d'une charge de matériau plastisol thermoplastique sec dans un moyen formant boîte de charge à extrémité ouverte (36), ledit appareil comportant: des moyens (42) pour relier un moule (34) et une boîte de charge (36) en relation avec l'extrémité ouverte et des moyens (53) pour faire tourner le moule et la boîte de charge de façon à distribuer le matériau plastisol contre une surface de coulage (56,58) du moule, caractérisé en ce que : ladite boîte de charge (36) consiste en une boîte unique à extrémité ouverte munie d'un diviseur (46) qui sépare la boîte en un premier (50) et un second (52) compartiments à extrémité ouverte qui sont susceptibles de distribuer deux charges de couleurs différentes contre des surfaces de coulage distinctes respectives (56,58) du moule (34) ; ledit moule comporte une première (35) et une seconde (37) parties divisées qui définissent lesdites première et seconde surfaces de coulage, lesdites première et seconde parties divisées étant susceptibles de se déplacer pour serrer ou desserrer le diviseur et ledit moule a des moyens de formation de joint (82,83,84) qui comportent une partie coudée (82) sur l'une (37) des parties de moule divisées qui est susceptible de coopérer avec ledit diviseur (43) lorsqu'il se trouve dans une position serrée pour former une région de collecte de poudre.

5. Appareil selon la revendication 4, comportant des moyens (72,76) pour réaliser le desserrage desdites parties divisées (35,37) dudit moule (34) à partir du diviseur pour permettre la séparation de ladite boîte de charge (36) à partir dudit moule, et des moyens (72,76) pour serrer lesdites parties divisées (35,37) pour provoquer la fusion finale desdites coquilles de plastisol séparées (92,94) coulées sur celle-ci afin de former un joint intégral (104,114) entre ces coquilles.

**Ansprüche**

1. Verfahren zum Formen einer einstückigen Kunststoffschale (10), bei welchem:
   Eine offene Form (34) bis zu einer Temperatur nahe der Schmelztemperatur eines thermoplastischen Plastisol-Materials erhitzt wird; eine Beschickungsmulde (36) mit der Form verbunden wird, um ein geschlossenes, Plastisol enthaltendes System zu bilden, und nachfolgend die Beschickungsmulde und die Form in einer Plastisol-Gieß-Aufeinanderfolge in Rotation versetzt werden, um die Plastisol-Teilchen durch Schwerkraft auf eine Gieß-Oberfläche (56, 58) der Form fallen zu lassen, sodaß eine geschmolzene Plastisol-Schale von einer gewünschten Gestalt und einer gewünschten Größe innerhalb der Form aufgebaut wird,
   dadurch gekennzeichnet,
   daß vor der Rotation der Beschickungsmulde (36) erste und zweite, geteilte Form-Teile (35, 37) vorgesehen werden, die in Bezug aufeinander und in Bezug auf einen Form-Teiler (46) zwischen gegenseitigen Festklemm-Stellungen und voneinander gelösten Stellungen bewegbar sind, um einen inneren Teil der Beschickungsmulde sowie getrennte, erste und zweite Gieß-Oberflächen (56, 58) der jeweiligen ersten und zweiten Form-Teile (35, 37) abzuschließen oder abzudichten, daß während der Rotation der Beschickungsmulde Plastisol-Teilchen von einer unterschiedlichen Farbe auf eine jede der vorerwähnten Gieß-Oberflächen fallengelassen werden, um teilweise geschmolzene Plastisol-Schalen (92, 94) von gewünschter Gestalt und gewünschter Größe an den jeweiligen geteilten Form-Teilen getrennt aufzubauen, daß zum Entfernen des Teilers (46) und der Beschickungsmulde (36) von der Form die geteilten Form-Teile (35, 37) getrennt werden, daß nachfolgend die geteilten Form-Teile (35, 37) so zusammengefügt werden, daß die getrennten, teilweise geschmolzenen Schalen (92, 94) miteinander verbunden werden, und daß schließlich die Schalen beheizt werden, um eine einteilige Verbindung zwischen ihnen und dadurch eine mehrfarbige Schale (10) zu bilden.

2. Verfahren nach Anspruch 1, bei welchem an dem einen der geteilten Form-Teile (37) ein erstes gebogenes Ende (82) und an dem anderen der geteilten Form-Teile (35) eine gerade Kante (83) vorgesehen werden; ein Teiler (46) mit einem zweiten gebogenen Ende (84) vorgesehen wird; die ersten und zweiten, geteilten Form-Teile auseinander angeordnet werden, um zwischen dem ersten gebogenen Ende und der geraden Kante einen Zwischenraum (79) mit einer Breite für eine Anpassung an das dazwischen befindliche, zweite, gebogene Ende zu bilden; und die geteilten Form-Teile während des Giessens so angeordnet werden, daß das zweite gebogene Ende zwischen dem ersten gebogenen Ende (82) und der geraden Kante (83) festgeklemmt wird, derart, daß eine Tasche (90) gebildet wird, um eine erste Menge der Plastisol-Teilchen gegen oder auf die gesamte, nach innen gerichtete Oberfläche des ersten gebogenen Endes an der einen Gieß-Oberfläche und über die gesamte, nach innen gerichtete Oberfläche der anderen Gieß-Oberfläche zu gießen.

3. Verfahren nach Anspruch 2, bei welchem die gerade Kante (83) an dem Mittelpunkt einer an dem ersten gebogenen Ende (82) gegossenen Plastisol-Schale (98) angeordnet wird und die an der anderen Gieß-Oberfläche gegossene Schale (102) so angeordnet wird, daß sie sich während des Verbindens der teilweise geschmolzenen Schalen miteinander von der Ebene (96) des Endes des ersten gebogenen Endes (82) aus erstreckt, sodaß nach abschließender Verschmelzung eine einstückige L-förmige Stoß-Verbindung (104) zwischen den ersten und zweiten Schalen ausgebildet wird.

4. Vorrichtung zum Formen einer dünnwandigen Kunststoffschale (10) in einer aufgeheizten offenen Form (34) aus einer Charge aus einem in einer offenen Beschickungs-Vorrichtung (36) enthaltenen trockenen thermoplastischen Plastisol-Material, mit Mitteln (42) zum Verbinden einer Form (34) und einer Beschickungsmulde (36) in einer gegenseitig offenen Beziehung und mit Mitteln (53), um die Form und die Beschickungsmulde in Rotation zu versetzen, sodaß das Plastisol-Material auf eine Gieß-Oberfläche (56, 58) der Form aufgetragen wird,

dadurch gekennzeichnet,

daß die Beschickungsmulde (36) eine einzige offene Mulde mit einem Teiler (46) aufweist, der die Mulde in erste (50) und zweite (52) offene Abteile unterteilt, welche dazu befähigt sind, zwei Chargen von unterschiedlicher Farbe auf jeweilige, getrennte Gieß-Oberflächen (56, 58) der Form (34) aufzutragen; daß die vorerwähnte Form erste (35) und zweite (37) geteilte Teile aufweist, welche die vorgenannten ersten und zweiten Gieß-Oberflächen definieren, wobei die ersten und zweiten geteilten Teile beweglich sind, um den Teiler festzuklemmen und zu lösen, und daß die Form verbindungsbildende Mittel (82, 83, 84) einschließlich eines gebogenen Endes (82) an dem einen (37) der geteilten Form-Teile aufweist, wobei dieses gebogene Ende mit dem Teiler (46) in Eingriff bringbar ist, wenn sich dieser in einer festgeklemmten Position befindet, um einen PulverSammel-Bereich zu bilden.

5. Vorrichtung nach Anspruch 4, mit Mitteln (72, 76) zum Lösen der geteilten Teile (35, 37) der Form (34) von dem Teiler, um die Trennung der Beschickungsmulde (36) von der Form zu ermöglichen, und mit Mitteln (72, 76) zum Befestigen der geteilten Teile (35, 37) miteinander, um zu verursachen, daß getrennte Plastisol-Schalen (92, 94), die hieran angegossen sind, abschließend geschmolzen werden, um eine einstückige Verbindung (104, 114) zwischen derartigen Schalen auszubilden.

## FIG. 1

## FIG. 5

## FIG. 6

## FIG. 7

## FIG. 8

## FIG. 9

FIG.2

FIG.3

FIG.4